# EUROPEAN PATENT APPLICATION

(11) **EP 4 645 596 A1**
(43) Date of publication of application: **05.11.2025**
(21) Application number: 23909679.5
(22) Date of filing: 07.11.2023
(51) Int. Cl.: H01Q 3/32

(54) **FILTER PHASE SHIFTER AND ANTENNA**

(30) Priority: 27.12.2022 CN 202211689204
(71) Applicant: CICT Mobile Communication Technology Co., Ltd., Canglong Island, Jiangxia District Wuhan, Hubei 430205 (CN)
(72) Inventor: HU, Qiyu, Wuhan, Hubei 430205 (CN); WANG, Sheng, Wuhan, Hubei 430205 (CN)
(74) Representative: Ipsilon
(86) International application number: PCT/CN2023/130308
(87) International publication number: WO 2024/139746

(57) **Abstract**

The present disclosure relates to the field of communication apparatuses and provides a filter phase shifter and an antenna. The filter phase shifter includes a dielectric substrate, a phase shifter, and a filter. The dielectric substrate has a first side and a second side which are opposite to each other, with the phase shifter located on the first side and the filter located on the second side. The phase shifter includes a rotating arm, a first microstrip transmission line, and at least one second microstrip transmission line. The rotating arm is rotatably connected to the first microstrip transmission line and slidably contacts the at least one second microstrip transmission line. The phase shifter also includes at least one sector-shaped open-circuited stub electrically connected in parallel with the first microstrip transmission line.

## Description

This application claims priority to Chinese Patent Application No. 2022116892041, entitled "FILTER PHASE SHIFTER AND ANTENNA" and filed on December 27, 2022, the entire contents of which are incorporated herein by reference.

### Technical field

The present disclosure relates to the field of communication apparatuses, particularly to a filter phase shifter and an antenna.

### Background

In the 5G mobile communication scenarios, phase shifters can alter the phase distribution of each radiation element in an array antenna, thereby changing a downtilt angle of an antenna beam and realizing beamforming and coverage optimization for electronically controlled antennas. Currently, common mechanical phase shifters are classified into dielectric sliding phase shifters and transmission line-sliding phase shifters. With the development of miniaturized, multi-frequency electronically regulated antennas, the integration of electronic components has been increasing, which raises higher demands on the sizes of various RF components.

### Summary

This invention provides a filter phase shifter and an antenna to address the issue in the prior art where the filter and phase shifter are designed and arranged as separate components, resulting in a large overall size of the device.

The first aspect of the present disclosure provides a filter phase shifter, which includes a dielectric substrate, a phase shifter and a filter.

The dielectric substrate has a first side and a second side opposite to each other, the phase shifter is disposed on the first side, and the filter is disposed on the second side.

The phase shifter includes a rotating arm, a first microstrip transmission line and at least one second microstrip transmission line, and the rotating arm is rotatably connected to the first microstrip transmission line and slidably contacts the at least one second microstrip transmission line.

The phase shifter includes at least one sector-shaped open-circuited stub electrically connected in parallel with the first microstrip transmission line.

In some embodiments, the second microstrip transmission line includes a plurality of second microstrip transmission lines, each of which has an extension direction that intersects an extension direction of the rotating arm.

In some embodiments, at least one of the plurality of second microstrip transmission lines has a slow wave structure.

In some embodiments, the dielectric substrate has a pivot hole at a position corresponding to the first microstrip transmission line, and the rotating arm is rotatably disposed at the pivot hole through a pivot.

In some embodiments, the dielectric substrate has a metalized via at a position corresponding to the first microstrip transmission line, and the at least one sector-shaped open-circuited stub is electrically connected to the first microstrip transmission line through the metalized via.

In some embodiments, the at least one sector-shaped open-circuited stub has a radius equal to one quarter of a wavelength corresponding to a parasitic passband frequency of the filter.

In some embodiments, the at least one sector-shaped open-circuited stub has a central angle of 90°.

In some embodiments, the at least one sector-shaped open-circuited stub has a circle center electrically connected in parallel with the first microstrip transmission line.

In some embodiments, the at least one sector-shaped open-circuited stub includes a plurality of sector-shaped open-circuited stubs arranged at intervals.

In some embodiments, the plurality of sector-shaped open-circuited stubs differ in at least one of a radius, a central angle, and a sector opening direction thereof.

The second aspect of the present disclosure provides an antenna including a filter phase shifter of any one of the above embodiments.

The details of one or more embodiments of the present invention are set forth in the following drawings and description. Other features, objectives, and advantages of the invention will become apparent from the specification, drawings, and claims.

### Brief Description of the Drawings

In order to more clearly illustrate the technical solutions in the present disclosure or prior art, the following provides a brief introduction to the drawings that will be used in the description of the embodiments or prior art. It is evident that the drawings described below are some embodiments of the present disclosure and are not intended to limit the disclosure and protection scope of the present application.
FIG. 1 is a schematic exploded view of a filter phase shifter according to the present disclosure.
FIG. 2 is a schematic structural diagram showing a first side of a filter phase shifter according to the present disclosure.
FIG. 3 is a schematic structural diagram showing a second side of a filter phase shifter according to the present disclosure.

### Reference Numerals

1. Dielectric substrate; 11. First side; 12. Second side; 13. Pivot hole; 14. Metalized via;
2. Phase shifter; 21. Rotating arm; 22. First microstrip transmission line; 221. Input end; 23. Second microstrip transmission line; 231. Output end; 24. Slow wave microstrip transmission line;
3. Filter; 31. Sector-shaped open-circuited stub.

### Detailed Description

In order to make the objectives, technical solutions, and advantages of the present disclosure clearer, the following provides a clear and complete description of the technical solutions in the present disclosure, in conjunction with the accompanying drawings. It is evident that the described embodiments are part of the embodiments of the present disclosure, and not all of the embodiments. Based on the embodiments of the present disclosure, all other embodiments that can be derived by a person of ordinary skill in the art without requiring inventive effort are within the scope of protection of the present disclosure.

In the description of the embodiments of the present disclosure, it should be noted that the terms 'center', 'longitudinal', 'lateral', 'up', 'down', 'front', 'back', 'left', 'right', 'vertical', 'horizontal', 'top', 'bottom' , 'inner', 'outer', and other similar directional or positional terms are used to describe the positional relationships based on the orientations or positions shown in the accompanying drawings. These terms are used merely for convenience in describing the embodiments of the present disclosure and to simplify the description, not indicating or implying that the device or component must have a specific orientation, structure, or mode of operation. Therefore, these terms should not be understood as limiting the embodiments of the present disclosure. Furthermore, the terms 'first', 'second', 'third', etc., are used for descriptive purposes only and should not be construed as indicating or implying relative importance.

In the description of the embodiments of the present disclosure, it should be noted that, unless otherwise explicitly specified and defined, the terms 'connection' and 'coupling' should be understood in a broad sense. For example, they can refer to fixed connections, detachable connections, integrated connections, mechanical connections, electrical connections, direct connections or indirect connections through an intermediate medium. For a person of ordinary skill in the art, the specific meaning of these terms in the context of the embodiments of the present disclosure can be understood based on the specific circumstances.

In the embodiments of the present disclosure, unless otherwise explicitly specified and defined, a first feature being 'above' or 'below' a second feature may refer to either the first and second features being in direct contact, or the first and second features being indirectly connected through an intermediate medium. Additionally, the terms 'on', 'upper', or 'on top of' in relation to the first feature with respect to the second feature can mean that the first feature is directly above or obliquely above the second feature, or it may simply indicate that the first feature is at a higher horizontal level than the second feature. Similarly, the terms 'below', 'lower', or 'under' in relation to the first feature with respect to the second feature can mean that the first feature is directly below or obliquely below the second feature, or it may simply indicate that the first feature is at a lower horizontal level than the second feature.

In the description of this specification, the reference terms 'one embodiment', 'some embodiments', 'example', 'specific example', or 'some examples', etc., are intended to indicate that the particular features, structures, materials, or characteristics described in connection with that embodiment or example are included in at least one embodiment or example of the present disclosure. It should be noted that the illustrative use of the above terms does not necessarily refer to the same embodiment or example. Moreover, the specific features, structures, materials, or characteristics described may be combined in any appropriate way in one or more embodiments or examples. Additionally, where there is no contradiction, those skilled in the art can combine and integrate different embodiments or examples, as well as features from different embodiments or examples, as described in the specification.

Using an electrically regulated antenna with a filter and a phase shifter that are independent from each other can achieve inter-frequency isolation and phase regulation. However, since the filter and phase shifter are designed as separate components, the overall size of the system becomes relatively large.

Existing microstrip filters use linear short-circuit lines as branches, but the connection between the linear short-circuit line and a main transmission line is relatively wide, which can cause discontinuities and result in higher insertion loss. Additionally, to avoid coupling resonance when a plurality of linear short-circuit lines are used, a relatively large spacing must be maintained between them. This leads to a non-compact circuit structure, and as a result, frequency response of the filter is not sufficiently steep, which negatively impacts the filtering performance.

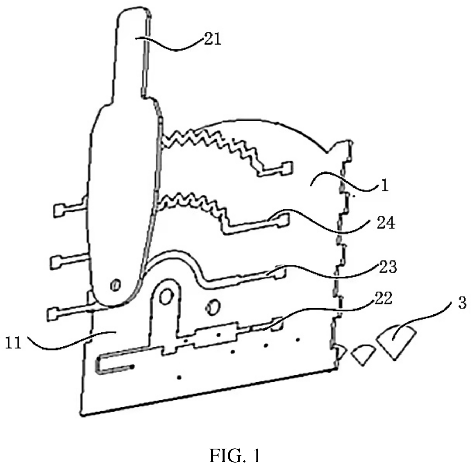

To solve the above-mentioned problems, as shown in FIGS. 1-3, a filter phase shifter according to the embodiments of the present disclosure is provided, which includes a dielectric substrate 1, a phase shifter 2, and a filter 3.

The dielectric substrate 1 has a first side 11 and a second side 12 that are opposite to each other. The phase shifter 2 is located on the first side 11, and the filter 3 is located on the second side 12.

Specifically, the dielectric substrate 1 provides support for both the phase shifter 2 and the filter 3. The material of the dielectric substrate 1 is chosen to have a high dielectric constant and low microwave loss, such as a print circuit board (PCB). The phase shifter 2 is located on one side of the dielectric substrate 1, while the filter 3 is located on the opposite side. Electrical connection between the phase shifter 2 and the filter 3 can be achieved through metalized vias 14 or conductive traces that penetrate through the dielectric substrate 1. By locating the phase shifter 2 and filter 3 on the first side 11 and second side 12 respectively, the space on the dielectric substrate 1 can be effectively utilized. Locating the phase shifter 2 and filter 3 on different circuit layers respectively allows for higher integration, which promotes antenna miniaturization and facilitates manufacturing.

The phase shifter 2 includes a first microstrip transmission line 22 and at least one second microstrip transmission line 23. The first microstrip transmission line 22 serves as a main feeder input transmission line of the phase shifter 2 and includes an input end 221. The second microstrip transmission line 23 serves as an output transmission line of the phase shifter 2. Each second microstrip transmission line 23 includes two output ends 231.

The phase shifter 2 also includes a rotating arm 21 which is rotatably connected to the first microstrip transmission line 22 and slidably contacts the at least one second microstrip transmission line 23.

Generally, one or more phase shifters 2 are installed in an electrically regulated antenna. The phase shifter 2 can change lengths of a feed network by sliding the rotating arm 21 left or right, thereby introducing phase differences to signals from the input end 221 to the various output ends 231. The phase difference alters the phase between adjacent antenna elements. When the phase between adjacent antenna elements follows a specific pattern, the main beam of the antenna radiates in a particular direction. By continuously moving the phase shifter 2, continuous electrical regulation of the beam can be achieved. When the beam is continuously changed in the vertical direction, it enables electrical down-tilting of the beam.

It can be understood that the phase shifter 2 alters the feeding phase of each antenna element by changing the lengths of the feed network to tilt the antenna beam downward, thereby achieving downtilt regulation of the electrically regulated antenna. The lengths of feed network of the phase shifter 2 are regulated by the movement of the rotating arm 21, which requires the rotating arm 21 to be rotatably connected to the first microstrip transmission line 22, such that when the first microstrip transmission line 22 receives an RF signal, the rotating arm 21 rotates with a certain angle of rotation to left or right to slidably contact the second microstrip transmission line 23 to change the lengths of the feed network.

The phase shifter 2 can be connected to a radiation element of a base station antenna (not shown in the figures). The signal that needs to be radiated by the radiation element is first modified to a required phase through the phase shifter 2, and then radiated by the radiation element. There may be provided with one or multiple radiation elements, and the multiple radiation elements are connected to the output ends of the phase shifter 2 in an RF manner.

The filter 3 includes at least one sector-shaped open-circuited stub 31 electrically connected in parallel with the first microstrip transmission line 22. The sector-shaped open-circuited stub 31 is located on the second side 12 of the dielectric substrate 1.

With a fixed size of the filter 3, the filter 3 with the sector-shaped open-circuited stub 31 can achieve a rectangular coefficient that is approximately two times of a rectangular coefficient achieved by a conventional filter. With a fixed rectangular coefficient of the filter 3, the length of the sector-shaped open-circuited stub 31 is half that of a conventional linear open-circuited stub, and the sector-shaped open-circuited stub 31 can achieve a wider bandwidth, further improving the performance of the filter 3.

It should be noted that the rectangular coefficient describes the steepness of the response curve of the filter 3 near a cutoff frequency. Generally, the rectangular coefficient is always greater than 1. However, the closer the rectangular coefficient is to 1, the smoother the characteristic curve is, and the stronger the ability to filter out interference signals from adjacent channels is. Bandwidth refers to the frequency width occupied by the signal. The bandwidth determines the filter's ability to separate adjacent frequency components in the signal, i.e., the frequency resolution. The wider the bandwidth of the filter 3 is, the better its filtering effect and the higher its resolution are. Transition band is one of the parameters used to evaluate the performance of the filter 3. The transition band is related to the rectangular coefficient. When the rectangular coefficient is smaller, the transition band becomes steeper and approaches the ideal characteristics, and thus the frequency filtering performance improves. Degree of attenuation in filtering refers to the relationship between the signal amplitudes of a specific frequency before and after passing through a filter. The greater the degree of attenuation is, the better the filtering performance of the filter 3 is.

In the embodiments of the present disclosure, since the phase shifter 2 and filter 3 are electrically connected in parallel, an RF unit synchronously transmits a signal to both the phase shifter 2 and filter 3, and the sector-shaped open-circuited stub 31 filters the signal. The signal after filtering is then transmitted to the rotating arm 21 which contacts the first microstrip transmission line 22. The rotating arm 21 slidably contacts the second microstrip transmission line 23 by rotating left or right, changing the lengths of the feed network and the phase between adjacent antenna elements, and thus regulating the downtilt angle of the antenna. The integrated design of the filter 3 and phase shifter 2 results in a more compact overall structure. Additionally, the filter 3 includes the sector-shaped open-circuited stub 31, which results in a smoother characteristic curve, a greater attenuation, a steeper transition band, better operational characteristics, and a better filtering performance.

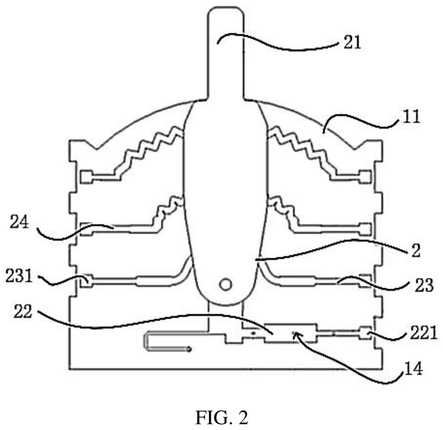

In alternative embodiments, as shown in FIG. 2, a plurality of second microstrip transmission lines 23 are provided, and the extension direction of the second microstrip transmission line 23 intersects with the extension direction of the rotating arm 21.

Specifically, in the case of a plurality of radiation elements, a plurality of second microstrip transmission lines 23 can be provided, which are spaced apart from the first microstrip transmission line 22 and located above the first microstrip transmission line 22. Since the rotation trajectory of the rotating arm 21 is arc-shaped, in order to ensure better sliding contact between the second microstrip transmission line 23 and the rotating arm 21, the section of the second microstrip transmission line 23 that contacts the rotating arm 21 can be of an arc shape, with the center of the arc shape coinciding with the axis of rotation of the rotating arm 21.

In addition to the first microstrip transmission line 22, each of the plurality of second microstrip transmission lines 23 is provided with two output ends 231, located at opposite sides of the second microstrip transmission line 23, respectively. Each output end 231 is connected to a different antenna element. Due to different transmission paths, the output ends 231 have different signal phases.

In alternative embodiments, as shown in FIG. 2, at least one of the plurality of second microstrip transmission lines 23 has a slow wave structure.

The slow wave structure is used to enhance the interaction between the moving electrons and the electromagnetic field in traveling-wave electronic devices, allowing the energy of the electron flow to be more efficiently converted into electromagnetic waves. This structure enables the second microstrip transmission line 23 to have a longer trace within a small space, which increases the displacement generated by the rotating arm 21 per unit of rotation angle, making better use of the space on the dielectric substrate 1.

Typically, the slow wave structure can be in the form of a helical shape, in which case the second microstrip transmission line 23 becomes a slow wave microstrip transmission line 24. Specifically, the slow wave microstrip transmission line 24 also slidably contacts the rotating arm 21. The section of the slow wave microstrip transmission line 24 that contacts the rotating arm 21 can be of an arc shape, with the center of the arc shape coinciding with the axis of rotation of the rotating arm 21. Additionally, the slow wave microstrip transmission line 24 also includes two output ends 231 located at two sides respectively.

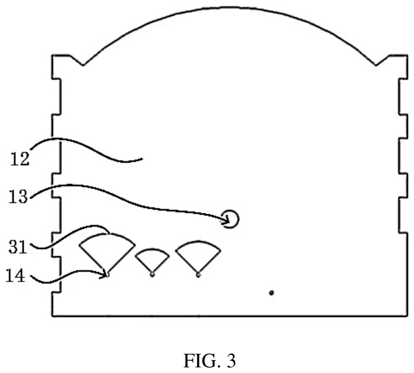

In alternative embodiments, as shown in FIGS. 2 and 3, the dielectric substrate 1 has a pivot hole 13 at a position corresponding to the first microstrip transmission line 22. The rotating arm 21 is rotatably disposed at the pivot hole 13 through a pivot.

It should be noted that the pivot hole 13 can be positioned along the central axis of the dielectric substrate 1. In this case, the pivot can be a rivet, and the rotating arm 21 is rotatably disposed at the pivot hole 13 through the rivet. In other words, the rivet serves a fixing function, while the rotating arm 21 is able to rotate relative to the rivet.

Additionally, in order to allow the rotating arm 21 to slide left and right, the rotating arm 21 is connected to a fixture which in turn is connected to a driving member. Under the drive of the driving member, the rotating arm 21 is able to rotate relative to the rivet.

Specifically, when the phase shifter 2 is used to tilt the beam downward, the rotation of the rotating arm 21 can cause the phases of the various output ends 231 to change according to a certain pattern, thus achieving downtilt of the antenna beam. The rotating arm 21 can alter the physical transmission line lengths from the input end 221 to the various output ends 231, thereby changing the phase of each output end 231. When the antenna is in a non-tilted state, the rotating arm 21 can be positioned at the far left. When downward tilting is needed, the rotating arm 21 is rotated to the right. The rotation angle of the rotating arm 21 is proportional to the downtilt angle of the beam, with the maximum downtilt angle achieved when the arm is rotated to the far right.

In alternative embodiments, as shown in FIG. 3, the dielectric substrate 1 has metalized vias 14 at positions corresponding to the first microstrip transmission line 22. The at least one sector-shaped open-circuited stub 31 is electrically connected in parallel with the first microstrip transmission line 22 through the metalized via 14.

The metalized via 14 not only prevents electromagnetic leakage but also improves the quality factor of a resonant cavity.

In alternative embodiments, the radius of the sector-shaped open-circuited stub 31 is equal to one quarter of a wavelength corresponding to a parasitic passband frequency of the filter. According to transmission line theory, the filter exhibits short-circuit characteristics at this frequency point, effectively suppressing the parasitic passband of the filter.

In alternative embodiments, there are no specific requirements for the central angle orientation of the sector-shaped open-circuited stub 31, which ensures sufficient spacing between the sector-shaped open-circuited stubs 31, and minimizes wiring while maintaining the performance of the filter 3. The central angle of the sector-shaped open-circuited stub 31 is commonly set to 90° or 60°, but other central angle values can also be chosen based on the design volume of the filter 3 or the optimization requirements for the filter's performance.

In alternative embodiments, as shown in FIG. 3, each sector-shaped open-circuited stub 31 has a circle center (not shown in the figures). The circle center of each sector-shaped stub is electrically connected in parallel with the first microstrip transmission line 22.

Specifically, the sector-shaped open-circuited stub 31 has a circle center, and the sector-shaped open-circuited stub 31 is connected to the metalized via 14 through the circle center. In other words, the connection between the sector-shaped open-circuited stub 31 and the first microstrip transmission line 22 is relatively narrow, which results in minimal discontinuity effects and thus reduces insertion loss.

In alternative embodiments, as shown in FIG. 3, a plurality of sector-shaped open-circuited stubs 31 are provided, which are arranged at intervals. The plurality of sector-shaped open-circuited stubs 31 are all electrically connected in parallel with the first microstrip transmission line 22.

Correspondingly, the dielectric substrate 1 has metalized vias 14 that correspond one-to-one with the sector-shaped open-circuited stubs 31. In other words, each sector-shaped open-circuited stub 31 is electrically connected in parallel with the first microstrip transmission line 22 through the corresponding metalized via 14.

Specifically, the first sector-shaped open-circuited stub 31 is electrically connected in parallel with the first microstrip transmission line 22 through the first metalized via 14, the second sector-shaped open-circuited stub 31 is connected in parallel with the first microstrip transmission line 22 through the second metalized via 14, and the third sector-shaped open-circuited stub 31 is connected in parallel with the first microstrip transmission line 22 through the third metalized via 14. The three sector-shaped open-circuited stubs 31 differ in at least one of a radius, a central angle, and a sector opening direction thereof.

It can be understood that since the main filtering function of the filter 3 is achieved by the sector-shaped open-circuited stubs 31, the more the number of the sector-shaped open-circuited stubs 31 is, the better the filtering performance of the filter 3 is.

In addition, the embodiments of the present disclosure also provide an antenna, which includes the filter phase shifter as described above. The antenna can be connected to a remote control unit, allowing users to perform regulation through base station software, a network management center, or a handheld device.

The handheld device includes, but is not limited to, mobile phones, tablets, personal digital assistants, wearable devices, etc. The embodiments of the present disclosure do not specifically limit the types of handheld devices.

Exemplarily, through the handheld device, the driving member can be controlled to rotate the rotating arm.

Specifically, since the antenna includes the filter phase shifter as described above, for the specific structures of which, references can be made to the above embodiments, the antenna of the present embodiment includes all the technical solutions of the above-described embodiments, and thus possesses all the beneficial effects achieved by these technical solutions, which will not be repeated here.

Finally, it should be noted that the above embodiments are provided to illustrate the technical solutions of the present disclosure, not to limit them. Although the disclosure has been described in detail with reference to the above-described embodiments, those of ordinary skill in the art will understand that they can modify the technical solutions described in these embodiments, or make equivalent substitutions for some of the technical features. These modifications or substitutions will make the essence of the corresponding technical solutions depart from the spirit and scope of the technical solutions of the present disclosure.

## Claims

1. A filter phase shifter, comprising a dielectric substrate, a phase shifter and a filter,
the dielectric substrate has a first side and a second side opposite to each other, the phase shifter is disposed on the first side, and the filter is disposed on the second side;
the phase shifter comprises a rotating arm, a first microstrip transmission line and at least one second microstrip transmission line, and the rotating arm is rotatably connected to the first microstrip transmission line and slidably contacts the at least one second microstrip transmission line; and
the phase shifter comprises at least one sector-shaped open-circuited stub electrically connected in parallel with the first microstrip transmission line.

2. The filter phase shifter according to claim 1, wherein the second microstrip transmission line comprises a plurality of second microstrip transmission lines, each of which has an extension direction that intersects an extension direction of the rotating arm.

3. The filter phase shifter according to claim 2, wherein at least one of the plurality of second microstrip transmission lines has a slow wave structure.

4. The filter phase shifter according to claim 1, wherein the dielectric substrate has a pivot hole at a position corresponding to the first microstrip transmission line, and the rotating arm is rotatably disposed at the pivot hole through a pivot.

5. The filter phase shifter according to claim 1, wherein the dielectric substrate has a metalized via at a position corresponding to the first microstrip transmission line, and the at least one sector-shaped open-circuited stub is electrically connected to the first microstrip transmission line through the metalized via.

6. The filter phase shifter according to claim 1, wherein the at least one sector-shaped open-circuited stub has a radius equal to one quarter of a wavelength corresponding to a parasitic passband frequency of the filter.

7. The filter phase shifter according to claim 1, wherein the at least one sector-shaped open-circuited stub has a central angle of 90°.

8. The filter phase shifter according to claim 1, wherein the at least one sector-shaped open-circuited stub has a circle center electrically connected in parallel with the first microstrip transmission line.

9. The filter phase shifter according to claim 1, wherein the at least one sector-shaped open-circuited stub comprises a plurality of sector-shaped open-circuited stubs arranged at intervals.

10. The filter phase shifter according to claim 1, wherein the plurality of sector-shaped open-circuited stubs differ in at least one of a radius, a central angle, and a sector opening direction thereof.

11. An antenna comprising the filter phase shifter according to any one of claims 1 to 10.
